# EUROPEAN PATENT SPECIFICATION

(11) **EP 4 425 661 B1**
(45) Date of publication and mention of the grant of the patent: **21.01.2026**
(21) Application number: 24155537.4
(22) Date of filing: 02.02.2024
(51) Int. Cl.: H01M 50/209, H01M 50/224, H01M 50/264, H01M 50/414

(54) **BATTERY PACK**
BATTERIEPACK
BLOC-BATTERIE

(30) Priority: 03.03.2023 JP 2023032836
(43) Date of publication of application: 04.09.2024
(73) Proprietor: Prime Planet Energy & Solutions, Inc., Chuo-ku, Tokyo 103-0022 (JP)
(72) Inventor: YOSHIDA, Naotake, Tokyo, 103-0022 (JP); MOGI, Yuya, Tokyo, 103-0022 (JP); MATSUYAMA, Satoru, Tokyo, 103-0022 (JP); IMAI, Masahiro, Tokyo, 103-0022 (JP)
(74) Representative: Kuhnen & Wacker Patent- und Rechtsanwaltsbüro PartG mbB

(56) References cited:
- WO-A1-2022/265418
- US-A1- 2010 112 424
- US-A1- 2017 062 783
- US-A1- 2022 384 895
- US-A1- 2023 327 263

## Description

### BACKGROUND OF THE INVENTION

### Field of the Invention

The present invention relates to a battery pack.

### Description of the Background Art

For example, WO 2016/174855 A1 discloses a power supply device including: a battery stack in which a plurality of secondary battery cells are stacked; end plates that each cover both end surfaces of the battery stack; and a battery fastening member that sandwiches the battery stack between the end plates. A rechargeable battery pack including a plurality of sets of unit cells adjacently placed to each other is known from US 2017/062783 A1, wherein each unit cell includes a rechargeable battery and a plurality of rechargeable battery modules each configured to electrically connect a corresponding set of the unit cells to each other, wherein each rechargeable battery module includes a pair of end plates respectively placed on outermost opposing sides thereof. The rechargeable battery pack also includes a coupling member connecting the end plates of the rechargeable battery modules to each other. Each of the end plates includes a first flange having a first width and extending from a bent portion of a main body to be fastened to the coupling member and a second flange having a second width smaller than the first width and extending from a middle portion of the first flange. WO 2022/265418 A1 discloses a battery pack case in which a battery cell stack with a plurality of battery cells stacked therein is accommodated, the battery pack case comprising: a first case in which the battery cell stack is mounted; and a second case coupled to the first case while covering the battery cell stack, wherein the first case includes a first plate part and a first side part, and the second case includes a second plate part and a second side part, wherein as the second case may be configured such that the thickness of the second plate part is thinner than the thickness of the second side part, the first side part with a relatively thick thickness is disposed so as to face an expanded surface of a battery cell, thereby minimizing a change in the volume of the battery pack case such that dimensional stability can be secured. US 2022/284895 A1 finally discloses a cell case including first and second metal plates constituting a first part of the cell case and placed such that the first and second metal plates are separated from each other and a resin portion provided between the metal plates such that the resin portion connects the first and second metal plates. The first metal plate and the second metal plate include a first overlapped portion and a second overlapped portion, respectively, such that the first overlapped portion and the second overlapped portion overlap with each other via the resin portion. The first overlapped portion includes a hook. The second overlapped portion has an opening. The hook is formed to be caught on the opening to restrict relative displacement between the first metal plate and the second metal plate along a direction where the first metal plate and the second metal plate are separated from each other.

### SUMMARY OF THE INVENTION

As a structure of a battery pack, there are the following types: a module type in which a plurality of battery cells are collectively restrained between end plates to form modules and the modules are combined to form a pack; and a cell-to-pack type in which a plurality of battery cells are combined to directly form a pack. In the cell-to-pack type, since restraint force for the plurality of battery cells acts as reaction force onto surroundings of the plurality of battery cells, members arranged in the surroundings of the plurality of battery cells are required to be firmly fixed together.

Thus, it is an object of the present invention to solve the above-mentioned problem and to provide a cell-to-pack type battery pack in which members arranged in surroundings of a plurality of battery cells can be firmly fixed together.
[1] A battery pack comprising: a plurality of cell stacks each of the cell stacks being constituted by a plurality of battery cells stacked in one direction, the plurality of cell stacks being arranged side by side at intervals in a direction orthogonal to the stacking direction of the battery cells; and a case body accommodating the plurality of cell stacks, the case body including a pair of first case side portions facing in the stacking direction of the battery cells, a pair of second case side portions facing in the direction orthogonal to the stacking direction of the battery cells, a case bottom portion, a plate member arranged on the case bottom portion, and a case top portion facing the case bottom portion in an upward/downward direction, the plurality of cell stacks being mounted on the plate member, each of the first case side portions corresponding to a first member, the first member having a longitudinal plate portion and a lateral plate portion, the longitudinal plate portion being in abutment with a battery cell in the stacking direction of the battery cells in each of the cell stacks, reaction force in the stacking direction of the battery cells being applied to the longitudinal plate portion from the plurality of battery cells, the lateral plate portion protruding from the longitudinal plate portion in a direction of the reaction force, and the plate member corresponding to a second member which second member overlaps with the lateral plate portion in a thickness direction of the lateral plate portion, the battery pack further comprising a connection member that connects the lateral plate portion to the second member.
   According to the battery pack thus configured, since the lateral plate portion is provided in the first member, the lateral plate portion is connected to the second member by the connection member. Thus, the first member and the second member can be fixed while receiving, at the connection member, the reaction force from the plurality of battery cells. Therefore, the first member and the second member can be firmly fixed in the cell-to-pack type battery pack.
[2] The battery pack according to [1], further comprising a resin member composed of a resin and partially or entirely interposed between the lateral plate portion and the second member.
   According to the battery pack thus configured, since the resin member composed of a resin seals between the lateral plate portion and the second member, a foreign matter can be prevented from entering the plurality of battery cells.
[3] The battery pack according to [2], wherein the resin member is an adhesive agent.

According to the battery pack thus configured, the reaction force from the plurality of battery cells can be received by the connection member and the adhesive agent.

According to the battery pack thus configured, since the material metal of the first member and the material metal of the second member are the same, there is no difference in linear expansion coefficient therebetween, with the result that a difference in thermal deformation amount is less likely to occur between the first member and the second member. Therefore, a strain is less likely to be generated in the structure of the battery pack due to a change in environmental temperature.

The battery pack according to any one of [1] to [3], wherein the first member is composed of a metal and the second member is composed of a metal different in type from the metal of the first member.

According to the battery pack thus configured, the first member composed of the metal and the second member composed of the metal different in type from the metal of the first member can be firmly fixed. Further, in a configuration in which the battery pack further includes a resin member composed of a resin and partially or entirely interposed between the lateral plate portion and the second member, when a difference in thermal deformation amount between the first member and the second member occurs due to a difference in linear expansion coefficient between the material metals, the difference in thermal deformation amount between the first member and the second member can be absorbed by the resin member.

The battery pack according to any one of [1] to [4], wherein the connection member includes a bolt, a flow drilling screw, a pin, or a rivet.

According to the battery pack thus configured, the reaction force from the plurality of battery cells can be received by the bolt, the flow drilling screw, the pin, or the rivet.

The battery pack according to [1], wherein the connection member includes: an adhesive agent interposed between the lateral plate portion and the second member; and a bent portion bent by 90° from a tip of the second member in the direction of the reaction force, the lateral plate portion being in abutment with the bent portion in the direction of the reaction force.

According to the battery pack thus configured, the reaction force from the plurality of battery cells can be received by the bent portion of the second member and the adhesive agent.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an exploded assembly diagram of a battery pack according to an embodiment of the present invention.
Fig. 2 is a perspective view showing a battery cell included in the battery pack in Fig. 1.
Fig. 3 is a cross sectional view showing the battery pack when viewed in a direction along a line III-III in Fig. 1.
Fig. 4 is a cross sectional view showing a first modification of the connection member in Fig. 3.
Fig. 5 is a cross sectional view showing a second modification of the connection member in Fig. 3.
Fig. 6 is a cross sectional view showing a third modification of the connection member in Fig. 3.
Fig. 7 is a cross sectional view showing a fourth modification of the connection member in Fig. 3.
Fig. 8 is a cross sectional view showing a fifth modification of the connection member in Fig. 3.
Fig. 9 is a cross sectional view showing a sixth modification of the connection member in Fig. 3.
Fig. 10 is a cross sectional view showing a seventh modification of the connection member in Fig. 3.
Fig. 11 is a cross sectional view showing an eighth modification of the connection member in Fig. 3.

### DESCRIPTION OF THE PREFERRED EMBODIMENTS

Embodiments of the present invention will be described with reference to figures. It should be noted that in the figures referred to below, the same or corresponding members are denoted by the same reference characters.

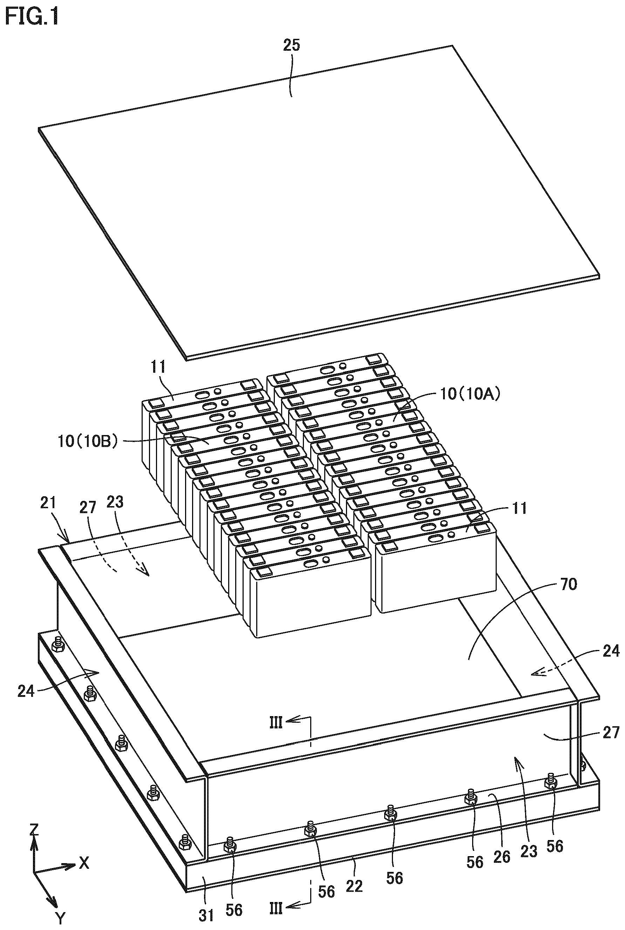

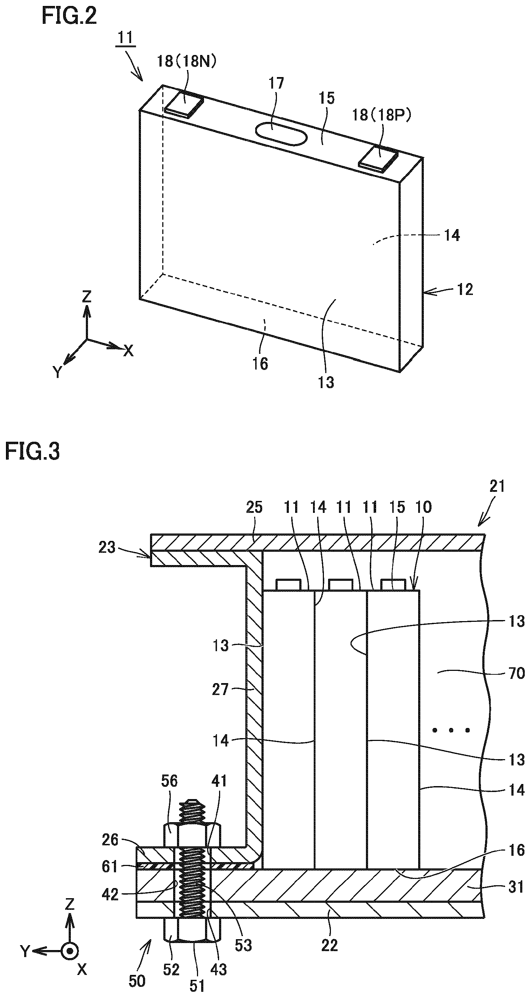

Fig. 1 is an exploded assembly diagram of a battery pack according to an embodiment of the present invention. Fig. 2 is a perspective view showing a battery cell included in the battery pack in Fig. 1. Fig. 3 is a cross sectional view showing the battery pack when viewed in a direction along a line III-III in Fig. 1.

Referring to Figs. 1 to 3, a battery pack 100 is used as a power supply for driving a vehicle such as a hybrid electric vehicle (HEV), a plug-in hybrid electric vehicle (PHEV), or a battery electric vehicle (BEV).

In the present specification, for convenience of explanation of a structure of battery pack 100, a "Y axis" represents an axis extending in a stacking direction of a plurality of below-described battery cells 11 and in a horizontal direction, an "X axis" represents an axis extending in a direction orthogonal to the Y axis and in the horizontal direction, and a "Z axis" represents an axis extending in an upward/downward direction.

First, an overall structure of battery pack 100 will be described. Battery pack 100 has a plurality of battery cells 11. The plurality of battery cells 11 are stacked in the Y axis direction. Each of battery cells 11 is a lithium ion battery. Battery cell 11 has a prismatic shape and has a thin plate shape in the form of a rectangular parallelepiped. The plurality of battery cells 11 are stacked such that the Y axis direction corresponds to the thickness direction of each battery cell 11.

Each of battery cells 11 has an exterior package 12. Exterior package 12 is constituted of a housing having a rectangular parallelepiped shape, and forms an external appearance of battery cell 11. An electrode assembly and an electrolyte solution are accommodated in exterior package 12.

Exterior package 12 has a first side surface 13, a second side surface 14, a top surface 15, and a bottom surface 16. Each of first side surface 13 and second side surface 14 is constituted of a flat surface orthogonal to the Y axis. First side surface 13 and second side surface 14 are oriented oppositely in the Y axis direction. Each of first side surface 13 and second side surface 14 has the largest area among the areas of the plurality of side surfaces of exterior package 12.

Each of top surface 15 and bottom surface 16 is constituted of a flat surface orthogonal to the Z axis. Top surface 15 is oriented upward. Bottom surface 16 is oriented downward. Top surface 15 is provided with a gas-discharge valve 17 for discharging gas generated in exterior package 12 to outside of exterior package 12 when internal pressure of exterior package 12 becomes equal to or more than a predetermined value due to the gas.

Battery cell 11 further has electrode terminals 18 including a pair of a positive electrode terminal 18P and a negative electrode terminal 18N. Each of electrode terminals 18 is provided on top surface 15. Positive electrode terminal 18P and negative electrode terminal 18N are provided to be separated from each other in the X axis direction. Positive electrode terminal 18P and negative electrode terminal 18N are provided on both sides beside gas-discharge valve 17 in the X axis direction.

The plurality of battery cells 11 are stacked such that first side surfaces 13 of battery cells 11 adjacent to each other in the Y axis direction face each other and second side surfaces 14 of battery cells 11 adjacent to each other in the Y axis direction face each other. Thus, positive electrode terminals 18P and negative electrode terminals 18N are alternately arranged in the Y axis direction in which the plurality of battery cells 11 are stacked. Between battery cells 11, 11 adjacent to each other in the Y axis direction, positive electrode terminal 18P and negative electrode terminal 18N arranged side by side in the Y axis direction are connected to each other by a bus bar (not shown). The plurality of battery cells 11 are electrically connected to one another in series.

The plurality of battery cells 11 stacked in the Y axis direction form cell stacks 10 (10A, 10B). Each of cell stacks 10 has a rectangular parallelepiped shape. As a typical example, the length of cell stack 10 in the Y axis direction is larger than the length of cell stack 10 in the Z axis direction and is larger than the length of cell stack 10 in the X axis direction. Cell stack 10A and cell stack 10B are arranged side by side in the X axis direction with a space being interposed therebetween.

Battery pack 100 further has a case body 21. Case body 21 is a box body having an external appearance with a rectangular parallelepiped shape as a whole. The plurality of battery cells 11 are accommodated in case body 21 (inner space 70).

Case body 21 has a plate member 31, a pair of case side portions 23, a pair of case side portions 24, a case top portion 25 and a case bottom portion 22. Plate member 31 as well as the pair of case side portions 23, the pair of case side portions 24, and case top portion 25 define and form inner space 70. Case bottom portion 22 is disposed at the bottom of case body 21. Plate member 31 is disposed between inner space 70 and case bottom portion 22 in the upward/downward direction.

Plate member 31 is constituted of a plate material that has a thickness direction corresponding to the Z axis direction and that is disposed in parallel with the X-Y axes plane. Plate member 31 is a cooling plate for radiating heat generated in battery cells 11 to outside. A coolant path in which coolant flows may be provided inside plate member 31.

Inner space 70 is surrounded by the pair of case side portions 23 and the pair of case side portions 24 in the horizontal direction. The pair of case side portions 23 face each other in the Y axis direction with inner space 70 being interposed therebetween. The pair of case side portions 24 face each other in the X axis direction with inner space 70 being interposed therebetween. The pair of case side portions 23 and the pair of case side portions 24 rise upward from the peripheral edges of case bottom portion 22 to form an opening on the opposite side. Case top portion 25 faces plate member 31 in the Z axis direction with inner space 70 being interposed therebetween. Case top portion 25 closes the opening formed by the upper end portions of case side portions 23.

Case body 21 is composed of a metal. Plate member 31 is composed of a metal different in type from the metal of each of case side portions 23, 24 and case bottom portion 22. The thermal conductivity of the metal of plate member 31 is larger than the thermal conductivity of the metal of each of case side portions 23, 24 and case bottom portion 22. The linear expansion coefficient of the metal of plate member 31 is larger than the linear expansion coefficient of the metal of each of case side portions 23, 24 and case bottom portion 22. As one example, plate member 31 is composed of aluminum, and each of case side portions 23, 24 and case bottom portion 22 is composed of iron (steel plate).

The plurality of battery cells 11 are mounted on plate member 31. Plate member 31 is thermally connected to the plurality of battery cells 11. Plate member 31 is connected to the plurality of battery cells 11 so as to attain heat transfer between each of the plurality of battery cells 11 and plate member 31.

The plurality of battery cells 11 are restrained by the pair of case side portions 23 at both ends in the Y axis direction. The pair of case side portions 23 apply restraint force (compression force) onto the plurality of battery cells 11 in the Y axis direction.

Each of case side portions 23 (corresponding to the "first member" in the present invention) has a longitudinal plate portion 27 and a lateral plate portion 26. Longitudinal plate portion 27 is constituted of a plate material that has a thickness direction corresponding to the Y axis direction and that is disposed in parallel with the X-Z axes plane. Longitudinal plate portion 27 extends in the form of a strip to have a longitudinal direction corresponding to the X axis direction. Longitudinal plate portion 27 is provided to rise on plate member 31. Longitudinal plate portion 27 is in abutment with battery cells 11 in the Y axis direction that is the stacking direction of battery cells 11. As a result of applying the restraint force in the Y axis direction onto the plurality of battery cells 11 by the pair of case side portions 23, reaction force in the Y axis direction is applied from the plurality of battery cells 11 to longitudinal plate portion 27.

Lateral plate portion 26 protrudes from longitudinal plate portion 27 in the Y axis direction in which the reaction force is applied. Lateral plate portion 26 is constituted of a plate material that has a thickness direction corresponding to the Z axis direction and that is disposed in parallel with the X-Y axes plane. Lateral plate portion 26 extends in the form of a strip to have a longitudinal direction corresponding to the X axis direction. Lateral plate portion 26 protrudes from the lower end portion of longitudinal plate portion 27 in a direction away from the plurality of battery cells 11 in the Y axis direction. Plate member 31 (corresponding to the "second member" in the present invention) overlaps with lateral plate portion 26 in the Z axis direction that is the thickness direction of lateral plate portion 26. Plate member 31 is sandwiched between case bottom portion 22 and lateral plate portion 26 in the Z axis direction.

Battery pack 100 further has a plurality of connection members 50. Each of connection members 50 connects lateral plate portion 26 to plate member 31. The plurality of connection members 50 are provided at intervals in the X axis direction.

As shown in Fig. 3, each of connection members 50 has a bolt 51 and a nut 56. Lateral plate portion 26, plate member 31, and case bottom portion 22 are respectively provided with holes 41, 42, and 43 that communicate with one another in the Z axis direction. A stem portion 53 of bolt 51 is inserted from the case bottom portion 22 side into hole 43, hole 42, and hole 41. A head portion 52 of bolt 51 is in abutment with case bottom portion 22 in the Z axis direction. Nut 56 is screwed into stem portion 53 protruding from lateral plate portion 26 in the +Z axis direction.

The size of bolt 51 is, for example, M8 or more. In consideration of an error caused during assembly of case body 21, hole 41 provided in lateral plate portion 26 may have an elongated hole shape.

According to such a configuration, in cell-to-pack type battery pack 100, lateral plate portion 26 is provided in case side portion 23 and lateral plate portion 26 is connected to plate member 31 by bolt 51 and nut 56 of connection member 50. Thus, case side portion 23 and plate member 31 can be firmly fixed while receiving the reaction force in the Y axis direction from the plurality of battery cells 11 by connection member 50 with the axial force generated by connection member 50.

In the present embodiment, since connection member 50 is constituted of bolt 51 and nut 56, connection member 50 can be formed in a simple manner, and an operation of connecting lateral plate portion 26, plate member 31, and case bottom portion 22 can be readily performed.

Battery pack 100 may further have a resin member 61. In this case, resin member 61 can be partially or entirely interposed between lateral plate portion 26 and plate member 31. Resin member 61 forms a layer that has a thickness direction corresponding to the Z axis direction and that is disposed in parallel with the X-Y axes plane.

Resin member 61 is composed of a resin. Resin member 61 may be a sealing material or an adhesive agent. A form of the sealing material is not particularly limited, and may be, for example, a form of sheet, grease, gap filler, or gel. The sealing material is composed of a material such as acrylic, urethane, silicone, or modified silicone. The adhesive agent is composed of a material such as epoxy, acrylic, urethane, silicone or cyanoacrylate.

According to such a configuration, since resin member 61 seals between lateral plate portion 26 and plate member 31, a foreign matter such as water or dust can be prevented from entering inner space 70 in which the plurality of battery cells 11 are accommodated. Further, when a difference in thermal deformation amount occurs between lateral plate portion 26 and plate member 31 and between plate member 31 and case bottom portion 22 due to a difference in linear expansion coefficient between the material metals, the difference can be absorbed by resin member 61. When resin member 61 is constituted of an adhesive agent, resin member 61 as well as connection member 50 receive reaction force in the Y axis direction from the plurality of battery cells 11. Thus, case side portion 23 and plate member 31 can be more firmly fixed.

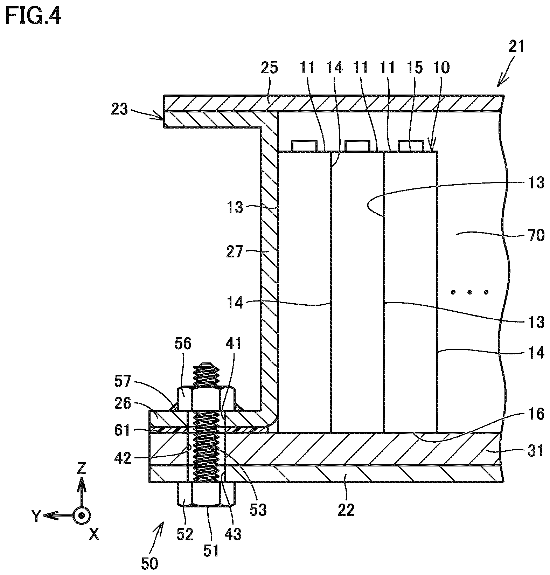

Next, various modifications of connection member 50 in Fig. 3 will be described. Fig. 4 is a cross sectional view showing a first modification of the connection member in Fig. 3. Referring to Fig. 4, connection member 50 according to the present modification further has a welding portion 57. Welding portion 57 connects nut 56 to lateral plate portion 26. In such a configuration, in consideration of an error caused during assembly of case body 21, hole 42 provided in plate member 31 may have an elongated hole shape.

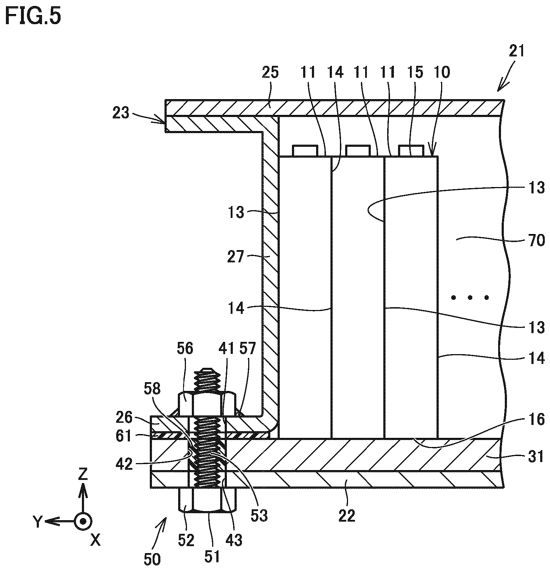

Fig. 5 is a cross sectional view showing a second modification of the connection member in Fig. 3. Referring to Fig. 5, connection member 50 according to the present modification further has a female threaded portion 58. Female threaded portion 58 is provided inside hole 42 of plate member 31 by insert molding. Stem portion 53 of bolt 51 is screwed into female threaded portion 58 in addition to nut 56.

According to such a configuration, since higher axial force is obtained in connection member 50, case side portion 23 and plate member 31 can be more firmly fixed. An error caused during assembly of case body 21 may be absorbed by case bottom portion 22.

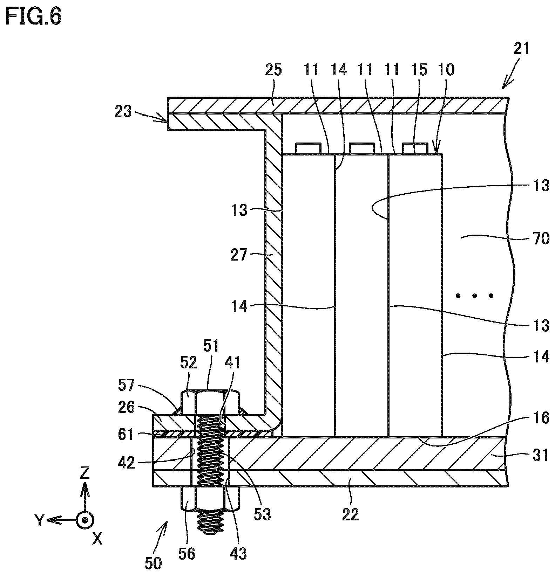

Fig. 6 is a cross sectional view showing a third modification of the connection member in Fig. 3. Referring to Fig. 6, in the present modification, stem portion 53 of bolt 51 is inserted from the lateral plate portion 26 side into hole 41, hole 42 and hole 43. Head portion 52 of bolt 51 is in abutment with lateral plate portion 26 in the Z axis direction. Nut 56 is screwed into stem portion 53 protruding in the -Z axis direction from case bottom portion 22. In consideration of an error caused during assembly of case body 21, each of holes 42 and 43 respectively provided in plate member 31 and case bottom portion 22 may have an elongated hole shape.

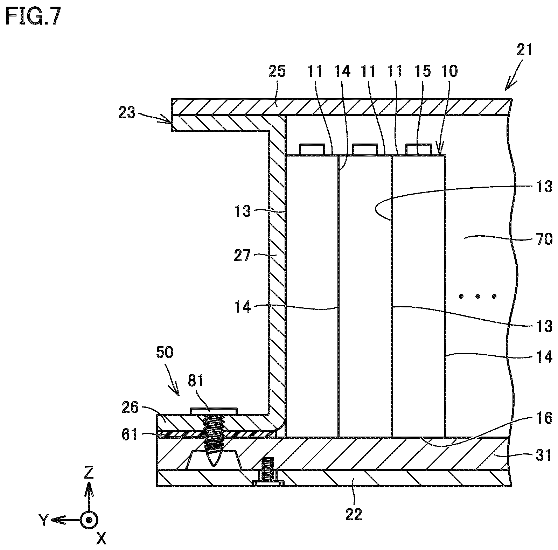

Fig. 7 is a cross sectional view showing a fourth modification of the connection member in Fig. 3. Referring to Fig. 7, connection member 50 according to the present modification has a flow drilling screw 81. Flow drilling screw 81 connects lateral plate portion 26 and plate member 31. Flow drilling screw 81 is inserted into plate member 31 while rotating at a high speed, and flow drilling screw 81 is accordingly mechanically connected to plate member 31 softened by frictional heat generated on that occasion.

According to such a configuration, as compared with the case where the bolt is used for connection member 50, durability can be improved against shear force and the connection between lateral plate portion 26 and plate member 31 can be suppressed from being loosened with passage of time.

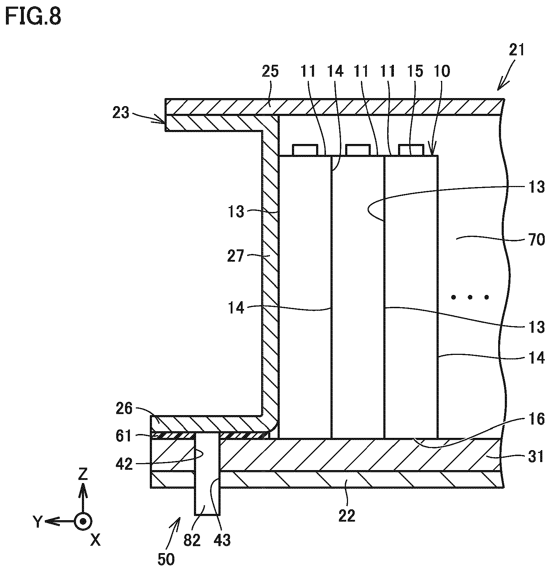

Fig. 8 is a cross sectional view showing a fifth modification of the connection member in Fig. 3. Referring to Fig. 8, connection member 50 according to the present modification has a pin 82. Pin 82 is provided in one piece with case side portion 23. Pin 82 protrudes from lateral plate portion 26 in the -Z axis direction. Pin 82 is inserted into hole 42 and hole 43. Resin member 61, which is composed of an adhesive agent, and pin 82 receive reaction force in the Y axis direction from the plurality of battery cells 11. In consideration of an error caused during assembly of case body 21, hole 42 provided in plate member 31 may have an elongated hole shape.

According to such a configuration, since connection member 50 is constituted of pin 82, connection member 50 can be formed in a simple manner. Thus, manufacturing cost of the battery pack can be reduced.

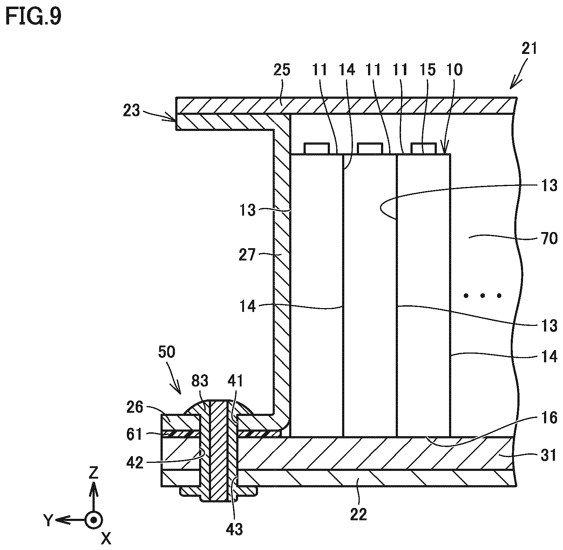

Fig. 9 is a cross sectional view showing a sixth modification of the connection member in Fig. 3. Referring to Fig. 9, connection member 50 according to the present modification has a rivet 83. Rivet 83 is inserted into hole 41, hole 42, and hole 43, and is swaged at both end portions in the Z axis direction. In consideration of an error caused during assembly of case body 21, each of holes 42 and 43 respectively provided in plate member 31 and case bottom portion 22 may have an elongated hole shape.

According to such a configuration, since connection member 50 is constituted of rivet 83, connection member 50 can be formed in a simple manner, and the operation of connecting lateral plate portion 26, plate member 31, and case bottom portion 22 can be readily performed.

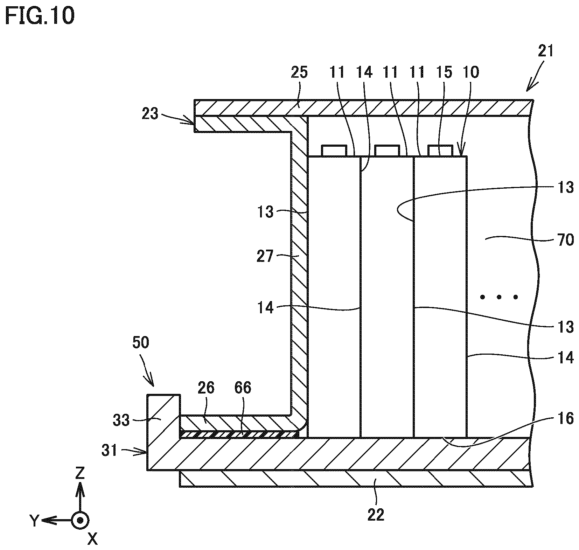

Fig. 10 is a cross sectional view showing a seventh modification of the connection member in Fig. 3. Referring to Fig. 10, connection member 50 according to the present modification has a bent portion 33 and an adhesive agent 66.

Bent portion 33 is provided in one piece with plate member 31. Bent portion 33 is bent by 90° from the tip of plate member 31 in the Y axis direction. Bent portion 33 is bent from the tip of plate member 31 in the +Z axis direction. The length of bent portion 33 in the Z axis direction is equal to or more than the total thickness of lateral plate portion 26 and adhesive agent 66 in the Z axis direction. Lateral plate portion 26 is in abutment with bent portion 33 in the Y axis direction.

Adhesive agent 66 is provided in the same manner as resin member 61 interposed between lateral plate portion 26 and plate member 31. Adhesive agent 66 as well as bent portion 33 receive reaction force in the Y axis direction from the plurality of battery cells 11.

According to such a configuration, since connection member 50 is constituted of adhesive agent 66 and bent portion 33, connection member 50 can be formed in a simple manner, and the operation of connecting lateral plate portion 26, plate member 31, and case bottom portion 22 can be readily performed.

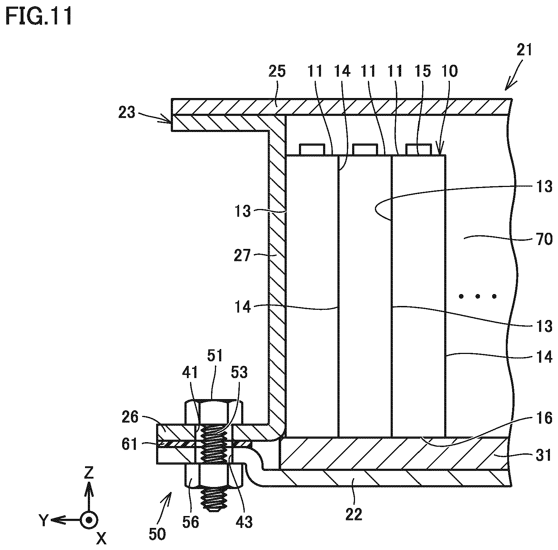

Fig. 11 is a cross sectional view showing an eighth modification of the connection member in Fig. 3. Referring to Fig. 11, in the present modification, a whole of plate member 31 is accommodated in inner space 70. Case bottom portion 22 (corresponding to the "second member" of the present invention in the present modification) overlaps with lateral plate portion 26 in the Z axis direction with resin member 61 being interposed therebetween.

Connection member 50 connects lateral plate portion 26 to case bottom portion 22. Connection member 50 has bolt 51 and nut 56. Stem portion 53 of bolt 51 is inserted from the lateral plate portion 26 side into hole 43 and hole 41. Head portion 52 of bolt 51 is in abutment with lateral plate portion 26 in the Z axis direction. Nut 56 is screwed into stem portion 53 protruding in the -Z axis direction from case bottom portion 22.

According to such a configuration, since lateral plate portion 26 and case bottom portion 22 composed of the same type of metal are connected, a difference in thermal deformation amount due to a difference in linear expansion coefficient between material metals does not need to be taken into consideration.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning of the terms of the claims.

## Claims

1. A battery pack comprising:
a plurality of cell stacks (10), each of the cell stacks being constituted by a plurality of battery cells (11) stacked in one direction, the plurality of cell stacks being arranged side by side at intervals in a direction orthogonal to the stacking direction of the battery cells (11); and
a case body (21) accommodating the plurality of cell stacks (10),
the case body (21) including a pair of first case side portions (23) facing in the stacking direction of the battery cells (11), a pair of second case side portions (24) facing in the direction orthogonal to the stacking direction of the battery cells (11), a case bottom portion (22), a plate member (31) arranged on the case bottom portion (22), and a case top portion (25) facing the case bottom portion (22) in an upward/downward direction,
the plurality of cell stacks (10) being mounted on the plate member (31),
each of the first case side portions (23) corresponding to a first member (23),
the first member (23) having a longitudinal plate portion (27) and a lateral plate portion (26), the longitudinal plate portion (27) being in abutment with a battery cell (11) in the stacking direction of the battery cells (11) in each of the cell stacks (10), reaction force in the stacking direction of the battery cells (11) being applied to the longitudinal plate portion (27) from the plurality of battery cells (11), the lateral plate portion (26) protruding from the longitudinal plate portion (27) in a direction of the reaction force, and
the plate member (31) corresponding to a second member (31) which second member overlaps with the lateral plate portion (26) in a thickness direction of the lateral plate portion (26),
the battery pack further comprising
a connection member (50, 81, 82, 83) that connects the lateral plate portion (26) to the second member (31).

2. The battery pack according to claim 1, further comprising a resin member (61) composed of a resin and partially or entirely interposed between the lateral plate portion (26) and the second member (31).

3. The battery pack according to claim 2, wherein the resin member (61) is an adhesive agent.

4. The battery pack according to any one of claims 1 to 3, wherein
the first member (23) is composed of a metal, and
the second member (31) is composed of a metal different in type from the metal of the first member (23).

5. The battery pack according to any one of claims 1 to 4, wherein the connection member (50, 81, 82, 83) includes a bolt (50), a flow drilling screw (81), a pin (82), or a rivet (83).

6. The battery pack according to claim 1, wherein
the connection member (50) includes
an adhesive agent (66) interposed between the lateral plate portion (26) and the second member (31), and
a bent portion (33) bent by 90° from a tip of the second member (31) in the direction of the reaction force, the lateral plate portion (26) being in abutment with the bent portion (33) in the direction of the reaction force.

7. The battery pack according to claim 1, wherein
the connection member (50, 83) connects the lateral plate portion (26), the second member (31) and the case bottom portion (22) to each other.

## Patentansprüche

1. Batteriepackung, aufweisend:
eine Mehrzahl von Zellstapeln (10), wobei jeder der Zellstapel aus einer Mehrzahl von Batteriezellen (11) besteht, die in einer Richtung gestapelt sind, wobei die Mehrzahl von Zellstapeln in Abständen in einer Richtung orthogonal zu der Stapelrichtung der Batteriezellen (11) nebeneinander angeordnet sind; und
einen Gehäusekörper (21), in dem die Mehrzahl von Zellstapeln (10) untergebracht sind,
wobei der Gehäusekörper (21) ein Paar erster Gehäuseseitenabschnitte (23), die in die Stapelrichtung der Batteriezellen (11) gerichtet sind, ein Paar zweiter Gehäuseseitenabschnitte (24), die in die Richtung orthogonal zu der Stapelrichtung der Batteriezellen (11) gerichtet sind, einen Gehäusebodenabschnitt (22), ein auf dem Gehäusebodenabschnitt (22) angeordnetes Plattenelement (31) und einen Gehäuseoberteilabschnitt (25), der in einer Aufwärts-/Abwärtsrichtung zu dem Gehäusebodenabschnitt (22) gerichtet ist, beinhaltet,
wobei die Mehrzahl von Zellstapeln (10) auf dem Plattenelement (31) montiert sind,
wobei jeder der ersten Gehäuseseitenabschnitte (23) einem ersten Element (23) entspricht,
wobei das erste Element (23) einen Längsplattenabschnitt (27) und einen seitlichen Plattenabschnitt (26) aufweist, wobei der Längsplattenabschnitt (27) in der Stapelrichtung der Batteriezellen (11) in jedem der Zellstapel (10) an einer Batteriezelle (11) anliegt, wobei eine Reaktionskraft in der Stapelrichtung der Batteriezellen (11) von der Mehrzahl von Batteriezellen (11) auf den Längsplattenabschnitt (27) ausgeübt wird, wobei der seitliche Plattenabschnitt (26) in einer Richtung der Reaktionskraft aus dem Längsplattenabschnitt (27) herausragt, und
wobei das Plattenelement (31) einem zweiten Element (31) entspricht, das den seitlichen Plattenabschnitt (26) in einer Dickenrichtung des seitlichen Plattenabschnitts (26) überlappt,
wobei die Batteriepackung ferner aufweist:
ein Verbindungselement (50, 81, 82, 83), das den seitlichen Plattenabschnitt (26) mit dem zweiten Element (31) verbindet.

2. Batteriepackung nach Anspruch 1, das ferner ein Harzelement (61) aufweist, das aus einem Harz besteht und teilweise oder vollständig zwischen dem seitlichen Plattenabschnitt (26) und dem zweiten Element (31) angeordnet ist.

3. Batteriepackung nach Anspruch 2, wobei das Harzelement (61) ein Haftmittel ist.

4. Batteriepackung nach einem der Ansprüche 1 bis 3, wobei
das erste Element (23) aus einem Metall besteht und
das zweite Element (31) aus einem Metall besteht, das sich in seiner Art von dem Metall des ersten Elements (23) unterscheidet.

5. Batteriepackung nach einem der Ansprüche 1 bis 4, wobei das Verbindungselement (50, 81, 82, 83) einen Bolzenstift (50), eine Fließbohrschraube (81), einen Stift (82) oder eine Niete (83) beinhaltet.

6. Batteriepackung nach Anspruch 1, wobei
das Verbindungselement (50) beinhaltet:
ein Haftmittel (66), das zwischen dem seitlichen Plattenabschnitt (26) und dem zweiten Element (31) angeordnet ist, und
einen um 90° von einer Spitze des zweiten Elements (31) in Richtung der Reaktionskraft gebogenen Abschnitt (33), wobei der seitliche Plattenabschnitt (26) in der Richtung der Reaktionskraft an den gebogenen Abschnitt (33) anstößt.

7. Batteriepackung nach Anspruch 1, wobei
das Verbindungselement (50, 83) den seitlichen Plattenabschnitt (26), das zweite Element (31) und den Gehäusebodenabschnitt (22) miteinander verbindet.

## Revendications

1. Un bloc-batterie comprenant :
une pluralité d'empilements de cellules (10), chacun des empilements de cellules étant constitué d'une pluralité de cellules de batterie (11) empilées dans une direction, la pluralité d'empilements de cellules étant disposés côte à côte à intervalles réguliers dans une direction orthogonale à la direction d'empilement des cellules de batterie (11) ; et
un corps de boîtier (21) logeant la pluralité d'empilements de cellules (10),
le corps de boîtier (21) comprenant une paire de premières parties latérales de boîtier (23) tournées dans la direction d'empilement des cellules de batterie (11), une paire de secondes parties latérales de boîtier (24) tournées dans la direction orthogonale à la direction d'empilement des cellules de batterie (11), une partie inférieure de boîtier (22), un élément de plaque (31) disposé sur la partie inférieure de boîtier (22), et une partie supérieure de boîtier (25) faisant face à la partie inférieure de boîtier (22) dans une direction vers le haut/vers le bas,
la pluralité d'empilements de cellules (10) étant montée sur l'élément de plaque (31),
chacune des premières parties latérales de boîtier (23) correspondant à un premier élément (23),
le premier élément (23) comportant une partie de plaque longitudinale (27) et une partie de plaque latérale (26), la partie de plaque longitudinale (27) étant en butée avec une cellule de batterie (11) dans la direction d'empilement des cellules de batterie (11) dans chacune des empilements de cellules (10), la force de réaction dans la direction d'empilement des cellules de batterie (11) étant appliquée à la partie de plaque longitudinale (27) à partir de la pluralité de cellules de batterie (11), la partie de plaque latérale (26) faisant saillie à partir de la partie de plaque longitudinale (27) dans une direction de la force de réaction, et
l'élément de plaque (31) correspondant à un deuxième élément (31), lequel deuxième élément chevauche la partie de plaque latérale (26) dans une direction d'épaisseur de la partie de plaque latérale (26),
le bloc de batterie comprenant en outre
un élément de connexion (50, 81, 82, 83) qui relie la partie de plaque latérale (26) au deuxième élément (31).

2. Le bloc-batterie selon la revendication 1, comprenant en outre un élément en résine (61) composé d'une résine et interposé partiellement ou entièrement entre la partie de plaque latérale (26) et le deuxième élément (31).

3. Le bloc-batterie selon la revendication 2, dans lequel l'élément en résine (61) est un agent adhésif.

4. Le bloc-batterie selon l'une des revendications 1 à 3, dans lequel le premier élément (23) est composé d'un métal, et
le deuxième élément (31) est composé d'un métal de type différent du métal du premier élément (23).

5. Le bloc-batterie selon l'une des revendications 1 à 4, dans lequel l'élément de connexion (50, 81, 82, 83) comprend un boulon (50), une vis autotaraudeuse (81), une goupille (82) ou un rivet (83).

6. Le bloc-batterie selon la revendication 1, dans lequel
l'élément de connexion (50) comprend
un agent adhésif (66) interposé entre la partie de plaque latérale (26) et le deuxième élément (31), et
une partie courbée (33) courbée à 90° à partir d'une extrémité du deuxième élément (31) dans la direction de la force de réaction, la partie de plaque latérale (26) étant en butée avec la partie courbée (33) dans la direction de la force de réaction.

7. Le bloc-batterie selon la revendication 1, dans lequel
l'élément de connexion (50, 83) relie entre eux la partie de plaque latérale (26), le deuxième élément (31) et la partie inférieure du boîtier (22).
